# EUROPEAN PATENT APPLICATION

(11) **EP 4 741 701 A1**
(43) Date of publication of application: **13.05.2026**
(21) Application number: 25211914.4
(22) Date of filing: 29.10.2025
(51) Int. Cl.: F16M 11/04, F16M 13/02

(54) **A SYSTEM ARRANGED FOR REMOVABLY ATTACHING A FLAT DISPLAY TO A SUPPORT AND METHODS OF REMOVING AND REMOVABLY ATTACHING A FLAT DISPLAY (FD) FROM A SUPPORT**

(30) Priority: 06.11.2024 NL 2039010
(71) Applicant: BordRijk Intellectual Property B.V., 6021 PX Budel (NL)
(72) Inventor: VAN DER WERFF, Jeichienus Johannes, BUDEL (NL)
(74) Representative: Algemeen Octrooi- en Merkenbureau B.V.

(57) **Abstract**

Methods and system (1) for removing and removably attaching a Flat Display to a support, the system comprising:
- a first frame (7) arranged for being connected to the Flat Display; and
- a second frame (9) arranged for being connected to the support;
- a locking arrangement (11), comprised by one of the first frame or the second frame, and arranged for locking the one of the first frame and the second frame to the other of the first frame and the second frame;
- a hook device (13), comprised by the locking arrangement, arranged for being rotated about a rotation axis into a first position wherein the locking arrangement locks, by the hook device, to the other of the first frame and the second frame and for being rotated into a second position wherein the locking arrangement allows removal of the first frame from the second frame, wherein the hook device is provided with a primary hook element (15) arranged for locking the first frame to the second frame and a secondary hook element (17) arranged for being in contact with the other of the first frame and the second frame for maintaining the hook device in the second position.

## Description

According to a first aspect, the present disclosure relates to a system arranged for removably attaching a Flat Display, preferably provided with a Flat Display Mounting Interface (FDMI), to a support such as a stand or wall mount.

According to a second aspect, the present disclosure relates to methods of removing and removably attaching a Flat Display (FD), preferably provided with a Flat Display Mounting Interface (FDMI), from a support such as a stand or wall mount, using a system according to the first aspect of the present disclosure.

The FDMI, also known as VESA Mounting Interface Standard (MIS) or VESA mount, is a family of standards defined by the Video Electronics Standards Association (VESA) for mounting flat panel monitors, televisions, and other displays to stands or wall mounts. It is implemented on most modern flat-panel monitors and televisions.

A known system comprises a frame, to which the Flat Display is attached, that can be secured to another frame, like a VESA bracket, by means of one or more screws. The screw(s) ensure(s) that the Flat Display, attached to the first frame, cannot be tilted forward, and becomes detached from the VESA bracket. A technician can remove the Flat Display by unscrewing the screw(s). To prevent the Flat Display from falling and/or breaking of screw(s) or other components of the system, the technician must support the Flat Display during the unscrewing of the screw(s). Especially for large (and heavy) Flat Displays this may be a difficult and challenging task.

In another known system, the Flat Display is attached to a VESA bracket by means of a spring system comprising two or more springs. The spring system holds a bracket/pawl in place by applying pressure on said bracket/pawl. This prevents the Flat Display from coming loose from the VESA bracket. The Flat Display may be detached and removed from the bracket by pulling the two or more springs down at the same time. A drawback of such a system is that the detaching and removing has to be done by at least two technicians. The technician has to pull the two or more springs, being posited at least on both sides of the Flat Display, at the same time and also simultaneously tilt the Flat Display to be able to lift the Flat Display off the VESA bracket. Especially with large (and heavy) Flat Displays this is very difficult.

Attaching the Flat Display to the VESA bracket also has the above-mentioned disadvantages.

It is therefore an object of the present disclosure to provide a system and methods that at least partly overcome one or more of the above-mentioned drawbacks.

The system according to the first aspect of the present disclosure comprises:
- a first frame arranged for being connected to the Flat Display, preferably via the FDMI thereof; and
- a second frame arranged for being connected to the support;
- a locking arrangement, comprised by one of the first frame or the second frame, and arranged for locking the one of the first frame and the second frame to the other of the first frame and the second frame;
- a hook device, comprised by the locking arrangement, arranged for being rotated about a rotation axis into a first position wherein the locking arrangement locks, by the hook device, to the other of the first frame and the second frame and for being rotated into a second position wherein the locking arrangement allows removal of the first frame from the second frame, wherein the hook device is provided with a primary hook element arranged for locking the first frame to the second frame and a secondary hook element arranged for being in contact with the other of the first frame and the second frame for maintaining the hook device in the second position.

With the system according to the present disclosure, the first frame, to which the Flat Display is connected, can be held in the same position on the second frame and switch between an attached state and a detached state by means of the hook device comprised by the locking arrangement. By switching from the attached state to the detached state, a single technician is able to safely remove the Flat Display from the second frame, connected to the support, with a minimized risk of the Flat Display falling down and/or damaging components of the system during the process of removing of the Flat Display. The same advantage applies in the process of removably attaching the Flat Display.

The design of the system according to the present disclosure is from a technical aspect much easier and comprises less components as compared to existing systems. Further, the system may be made of a more robust material; no plastic components, only metal components. This allows to also mount heavy (up to 150 kg) Flat Displays.

In an embodiment, the locking arrangement further comprises:
- a biasing device arranged for providing a force to the hook device for biasing the hook device into the first position.

The force, provided by the biasing device, may increase when moving the hook device from the first position towards the second position.

A momentum applied to the hook device due to the force, provided by the biasing device, in the second position of the hook device may be smaller than a friction between the hook device and the one of the first frame and the second frame for maintaining the hook device in the second position.

In an embodiment, the biasing device comprises a spring for providing the force.

A position of the rotation axis relative to the hook device may differ between the first position of the hook device and the second position of the hook device.

In an embodiment, the hook device or the one of the first frame and the second frame comprises a slot, and wherein the rotation axis is at least partly provided in the slot for allowing the hook device to translate relative to the rotation axis. Preferably, an elongated side of the slot is extending in a direction that encloses an angle in the range of 20 to 60 degrees with a direction of the force provided by the biasing device, preferably encloses an angle in the range of 25 to 35 degrees with a direction of the force provided by the biasing device.

In an embodiment, in the first position of the hook device, the primary hook element engages with an engaging element of the other of the first frame and the second frame for locking the locking arrangement to the other of the first frame and the second frame and wherein, in the second position of the hook device, the secondary hook element engages with the engaging element of the other of the first frame and the second frame.

The primary hook element may be positioned relative to the secondary hook element such that, when the hook device is in the second position, upon disengagement of the secondary hook element with the engaging element, engagement of the primary hook element with the engaging element of the other of the first frame and the second frame for locking the locking arrangement to the other of the first frame and the second frame, by movement of the hook device towards the first position thereof, is avoided.

In another embodiment, the system further comprises:
- a blocking arrangement, such as a screw, bolt, or pin, arranged for blocking a movement of the hook device out of the first position.

In yet another embodiment, the system further comprises:
- a hanging device arranged for hanging the first frame on the second frame.

A maximum distance of a first engagement surface of the hook device for engagement of the primary hook element with the other of the first frame and the second frame and a maximum distance of a second engagement surface of the hook device for engagement of the secondary hook element with the other of the first frame and the second frame may be substantially equal, preferably equal.

The method of removing a Flat Display from a support according to the second aspect of the present disclosure comprises the step of:
- rotating, by a user, the hook device, about the rotation axis into the second position wherein the locking arrangement allows removal of the first frame from the second frame.

The method of removing may further comprise the steps of:
- moving, by the user, the one of the first frame and the second frame relative to the other of the first frame and the second frame for disengaging the hook device from the other of the first frame and the second frame; and
- disconnecting, by the user, the first frame from the second frame.

The method of removably attaching a Flat Display to a support according to the second aspect of the present disclosure comprises the step of:
- moving, by a user, the one of the first frame and the second frame relative to the other of the first frame and the second frame for locking the hook device, with the primary hook element to the other of the first frame and the second frame.

Embodiment of the system according to the first aspect of the present disclosure as presented herein are also applicable to the methods according to the second aspect of the present disclosure, and vice versa.

Effects of the system according to the first aspect of the present disclosure as presented herein correspond to or are similar to effects of the methods according to the second aspect of the present disclosure.

The present disclosure is hereinafter explained in more detail with reference to the accompanying drawings in which embodiments of the present disclosure are shown and in which like reference numbers indicate the same or similar elements. The present disclosure is by no means limited to the embodiments described therein.
Fig. 1 schematically shows a system for removably attaching a Flat Display to a support according to the present disclosure;
Fig. 2 schematically shows a detailed part of the system of Fig. 1;
Fig. 3 schematically shows two side views of a system according to the present disclosure;
Fig. 4 schematically shows an exploded view of a locking arrangement according to the present disclosure;
Fig. 5 schematically shows three stages a)-c) of mounting a first frame to a second frame according to the present disclosure;
Fig. 6 schematically shows three stages a)-c) of releasing a first frame to a second frame according to the present disclosure;
Fig. 7 schematically shows three stages a)-c) of removing a first frame to a second frame according to the present disclosure;
Fig. 8 schematically shows a method of removing a Flat Display from a support according to the present disclosure;
Fig. 9 schematically shows a method of removably attaching a Flat Display to a support according to the present disclosure.

The present disclosure will now be described in detail with reference to the accompanying drawings, which illustrate exemplary embodiments of the system 1 and the methods of removing and removably attaching 101,201 a Flat Display from/to a support. It is to be understood that these embodiments are provided by way of example only and are not intended to limit the scope of the present disclosure. The following detailed description should be read in conjunction with the claims and the figures.

As used herein, the term "and/or" includes any and all combinations of one or more of the associated listed items. Expressions such as "at least one of," when preceding a list of elements, modify the entire list of elements and do not modify the individual elements of the list.

As the inventive concept allows for various changes and numerous embodiments, particular embodiments will be illustrated in the drawings and described in more detail in the written description. Effects, features, and a method of achieving the inventive concept will be obvious by referring to exemplary embodiments of the inventive concept with reference to the accompanying drawings. The inventive concept may, however, be embodied in many different forms and should not be construed as being limited to the embodiments set forth herein.

In the embodiments described in the present specification, an expression utilized in the singular encompasses the expression of the plural, unless it has a clearly different meaning in the context. Also, it is to be understood that the terms such as "including," "having," and/or "comprising" are intended to indicate the presence of the stated features or components and are not intended to preclude the presence or addition of one or more other features or components.

It will be understood that when a layer, region, or component is referred to as being "on" or "onto" another layer, region, or component, it may be directly or indirectly formed on the other layer, region, or component. That is, for example, intervening layer(s), region(s), or component(s) may be present.

Sizes of components in the drawings may be exaggerated for convenience of explanation. In other words, since sizes and thicknesses of components in the drawings are arbitrarily illustrated for convenience of explanation, the following embodiments of the present disclosure are not limited thereto.

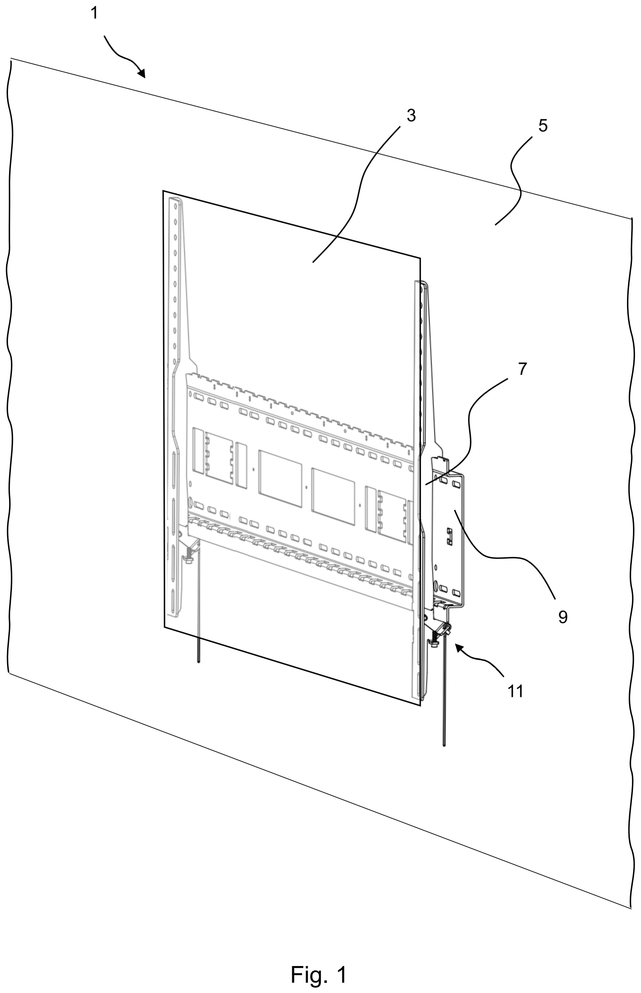

Fig. 1 shows a schematic representation of a system 1 arranged for removably attaching a Flat Display 3, preferably provided with a Flat Display Mounting Interface (FDMI), to a support 5, such as a stand or wall mount. The system 1 comprises a first frame 7 that is arranged for being connected to the Flat Display 3, preferably via the FDMI thereof, and a second frame 9 that is arranged for being connected to the support 5. As a matter of convenience, the Flat Display 3 is shown partly transparent, such that the first frame 7 and the second 9, substantially positioned behind the Flat Display 3 in the representation of Fig. 1, can be seen.

The system 1 further comprises a locking arrangement 11, comprised by the first frame, and arranged for locking the first frame 7 to the second frame 9. The skilled person will realize that the locking arrangement 11 may also be comprised by the second frame 9 and is being arranged for locking the second frame 9 to the first fame 7.

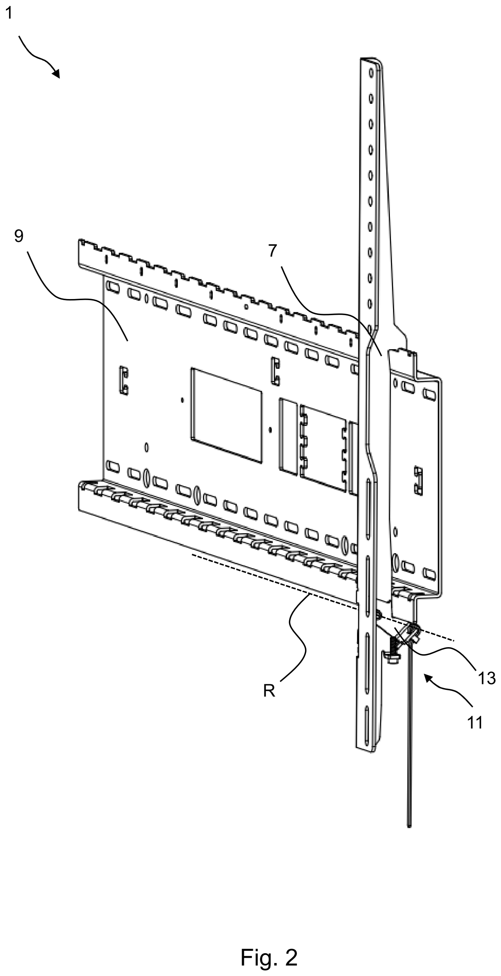

A detailed part of the system 1 of Fig. 1 is presented in Fig. 2. At the lower part of the first frame 7, the locking arrangement 11 is clearly shown. The locking arrangement 11 comprises a hook device 13 that is arranged for being rotated about a rotation axis R into a first position wherein the locking arrangement 11 locks, by the hook device 13, the other of the first frame 7 and the second frame 9 and for being rotated into a second position wherein the locking arrangement 11 allows removal of the first frame 7 from the second frame 9.

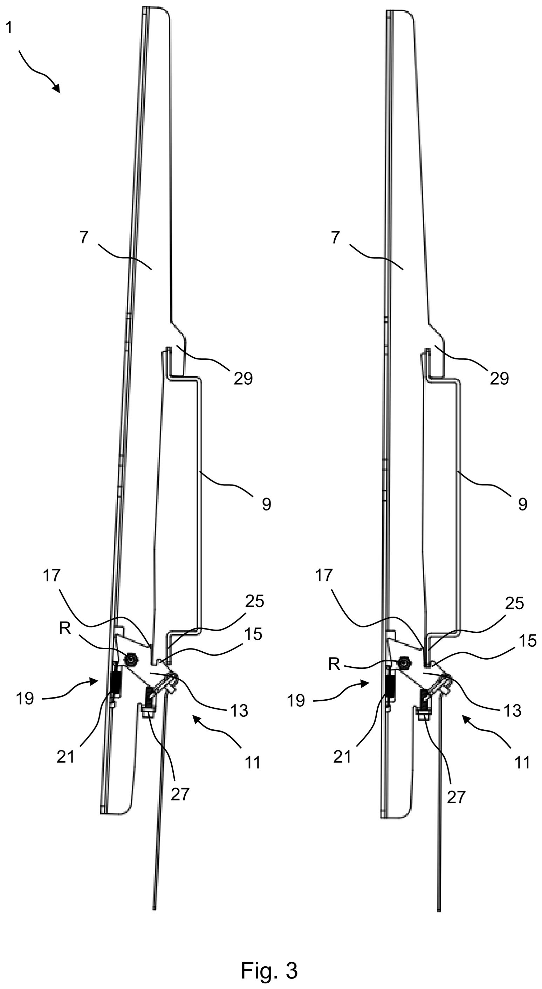

As shown in Fig. 3, the hook device 13 is provided with a primary hook element 15 and a secondary hook element 17. The primary hook element 15 is arranged for locking the first frame 7 to the second frame 9 and the secondary hook element 17 is arranged for being in contact with the other of the first frame 7 and the second frame 9 for maintaining the hook device 13 in the second position.

Fig. 3 further shows two situations of the system 1. In both situations, the first frame 7 comprises the locking arrangement 11 comprising the hook device 13, which is in the first position. In the situation shown on the left, the first frame 7 is not attached to the second frame 9 at the lower part of the first frame 7. In the situation shown on the right, the first frame 7 is attached to the second frame 9 in such a manner that the hook device 13, comprised by the locking arrangement 11, locks the first frame 7 to the second frame 9 with the primary hook element 15. A blocking arrangement 27, in this case a bolt, comprised in the system 1, is arranged for blocking a movement of the hook device 13 out of the first position.

The side view of the detailed part of the system 1 shown in Fig. 3 further shows that the locking arrangement 11 comprises a biasing device 19. The biasing device 19 is arranged for providing a force to the hook device 13 for biasing the hook device 13 into the first position. The force is provided by a spring 21 that is comprised in the biasing device 19.

In Fig. 3 it is further shown that the system 1 comprises a hanging device 29 that is arranged for hanging the first frame 7 on the second frame 9.

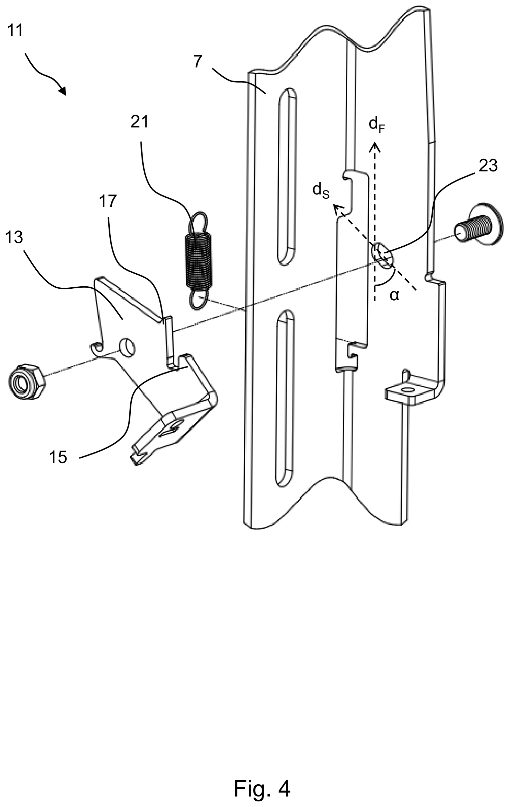

An exploded view of the locking arrangement 11 is shown in Fig. 4. It clearly shows that the locking arrangement 11 comprises the hook device 13, which comprises the primary and secondary hook elements 15,17.

Fig. 4 further shows that the first frame 7 comprises a slot 23. However, the slot 23 may also be provided in the hook device 13 and/or in the second frame 9. An elongated side of the slot 23 is extending in a direction d_{S} that encloses an angle α in the range of 20 to 60 degrees with a direction d_{F} of the force provided by the biasing device 19, preferably encloses an angle α in the range of 25 to 35 degrees with a direction d_{F} of the force provided by the biasing device 19.

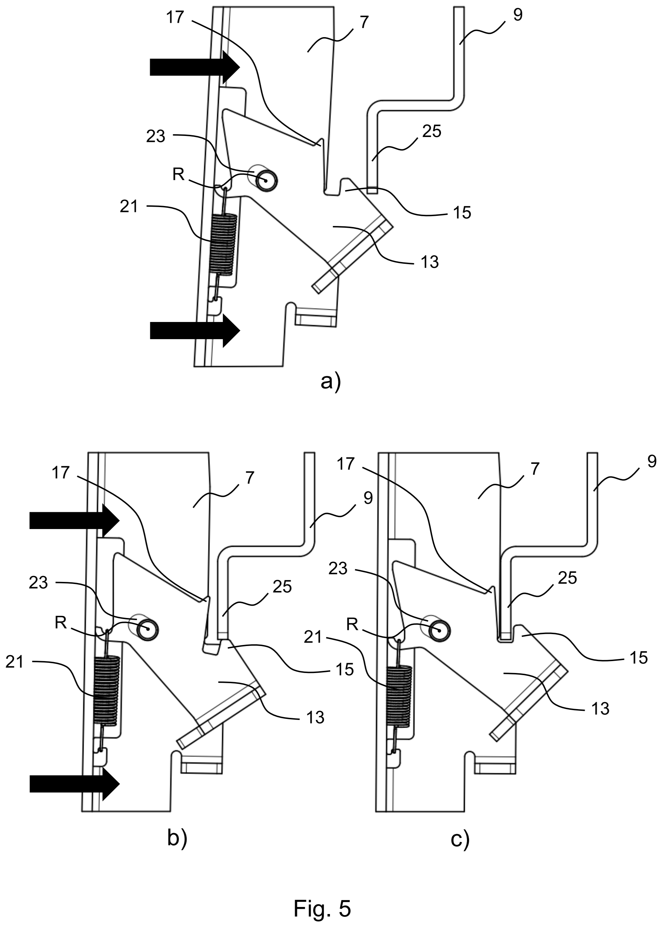

Figs. 5 to 7 show various situations of the first frame 7 relative to the second 9 using the locking arrangement 11 of the system 1. As can be seen in Figs. 5 to 7, a maximum distance of a first engagement surface of the hook device 13 for engagement of the primary hook element 15 with the second frame 9 and a maximum distance of a second engagement surface of the hook device 13 for engagement of the secondary hook element 17 with the second frame 9 are substantially equal. Preferably, these maximum distances are equal.

Fig. 5 illustrates the mounting (or: removably attaching) of the first frame 7 on the second frame 9. In Fig. 5-a), the first frame 7, with the hook device 13 in the first position, is moved towards the second frame 9 (indicated by the two thick solid arrows).

In Fig. 5-b), the primary hook element 15 engages with the engaging element 25 of the second frame 9 thereby forcing the hook device to rotate about the rotation axis R such that the primary hook element 15 moves downwards; the force, provided by the biasing device 19, comprising the spring 21, increases when moving the hook device 13 from the first position towards the second position.

In the engaging process, the locking arrangement 11 lock to the second frame 9, shown in Fig. 5-c): the engaging element 25 is locked in the hook device 13 such that the first frame 7 is locked to the second frame 9. The primary hook element 15 prevents that the first frame 7 can be removed from the second frame 9. Further, the rotation axis R is provided in the slot 23 for allowing the hook device 13 to translate relative to the rotation axis R.

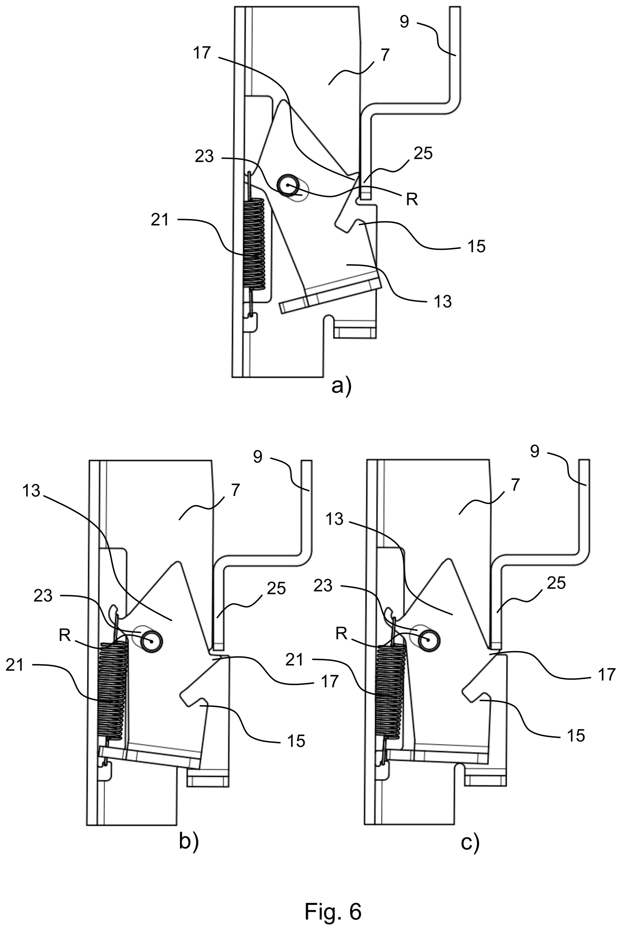

Fig. 6 illustrates the releasing of the first frame 7 from the second frame 9. In Fig. 6-a), the hook device 13 is moved, for example by a downward-pulling force, from the first position towards the second position. The position of the rotation axis R relative to the hook device 13 differs between the first position of the hook device 13 and the second position of the hook device (compare Fig. 6-a) to Fig. 6-b)).

In Fig. 6-b), the hook device 13 is in the second position and the secondary hook element 17 engages with the engaging element 15 of the second frame 9.

In Fig. 6-c), a momentum applied to the hook device 13 due to the force, provided by (the spring 21 of) the biasing device 19, in the second position of the hook device 13 is smaller than a friction between the hook device 13 and the second frame 9 for maintaining the hook device 13 in the second position. The first frame 7 is now unlocked (released) and can now be removed from the second frame 9.

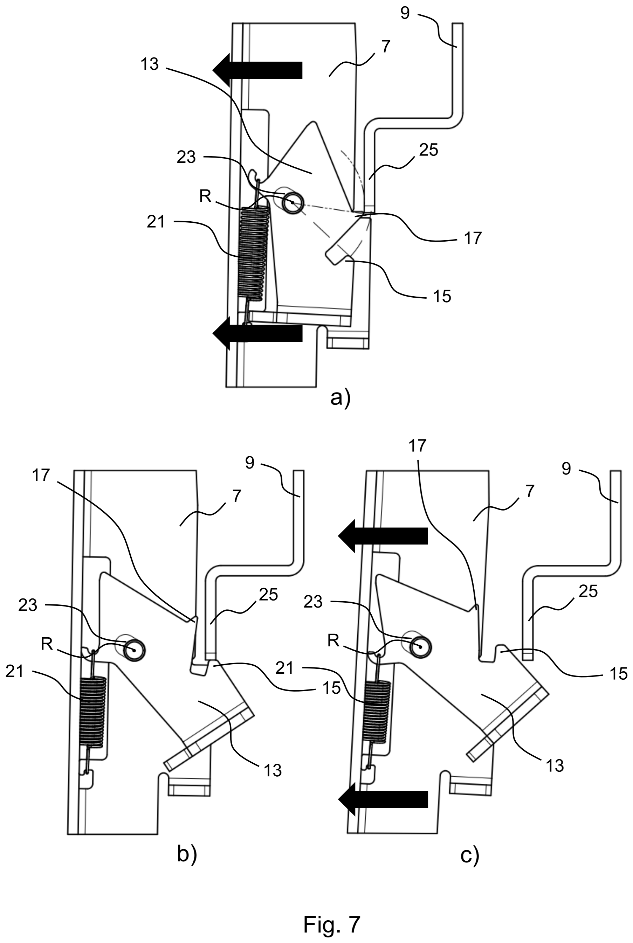

Fig. 7 illustrates the removing of the first frame 7 from the second frame 9. In Fig. 7-a), the first frame 7 is slightly tilted such that the bottom of the first frame 7 moves away from the engaging element 25 of the second frame 9, hence, it disengages from the engaging element 25 (illustrated by the thick black arrows).

In Fig. 7-b), the secondary hook element 17 is not engaging anymore with the engaging element 25 of the second frame 9 and due to the pulling force of the spring 21 of the biasing device 19, the hook device 13 rotates about the rotation axis R towards its first position such that (the tip of) the primary hook element 15 engages with the engaging element 25 of the second frame 9. As can be seen, the primary hook element 15 is positioned relative to the secondary hook element 17 such that, when the hook device 13 is in the second position, upon disengagement of the secondary hook element 17 with the engaging element 25, engagement of the primary hook element 15 with the engaging element 25 of the other of the first frame 7 and the second frame 9 for locking the locking arrangement 11 to the second frame 9, by movement of the hook device 13 towards the first position thereof, is avoided.

In Fig. 7-c), the first frame 7 is moved further away from the second frame 9 to remove the first frame 7 from the second frame 9. The hook device 13 moved back to the first position.

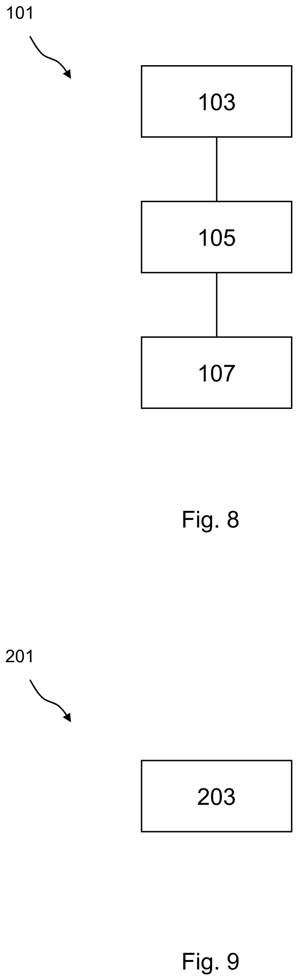

Fig. 8 shows the method 101 of removing a Flat Display, preferably provided with a FMDI, from a support 5 such as a stand or wall mount according to the second aspect of the present disclosure, using a system 1 according to the first aspect of the present disclosure. The method 101 comprises the steps of: rotating 103, by a user, the hook device 13 about the rotation axis R into the second position wherein the locking arrangement 11 allows removal of the first frame 7 from the second frame 9; moving 105, by the user, the one of the first frame 7 and the second frame 9 relative to the other of the first frame 7 and the second frame 9 for disengaging the hook device 13 from the other of the first frame 7 and the second frame 9; and disconnecting 107, by the user, the first frame 7 from the second frame 9.

Fig. 9 shows the method 201 of removably attaching a Flat Display, preferably provided with a FMDI, from a support 5 such as a stand or wall mount according to the second aspect of the present disclosure, using a system 1 according to the first aspect of the present disclosure. The method 201 comprises the step of moving 203, by a user, the one of the first frame 7 and the second frame 9 relative to the other of the first frame 7 and the second frame 9 for locking the hook device 13, with the primary hook element 15 to the other of the first frame 7 and the second frame 9.

The foregoing description of the embodiments of the disclosure has been presented for purposes of illustration and description and is not intended to be exhaustive or to limit the claimed disclosure to the precise form disclosed. Those skilled in the art will readily appreciate that many modifications and variations to the claimed disclosure are possible in light of the above teaching. The embodiments were chosen and described in order to best explain the principles of the present disclosure and its practical application to thereby enable others skilled in the art to best utilize the present disclosure in various embodiments and with various modifications as are suited to the particular use contemplated. It is intended that the scope of the present disclosure be defined exclusively by the following claims, and equivalents thereof.

A single unit or component may fulfil the functions of several items recited in the claims. The mere fact that certain measures are recited in mutually different dependent claims does not indicate that a combination of these measured cannot be used to advantage. Any reference signs in the claims should not be construed as limiting the scope thereof.

## Claims

1. A system (1) arranged for removably attaching a Flat Display (3), preferably provided with a Flat Display Mounting Interface (FDMI), to a support (5) such as a stand or wall mount, the system comprising:
- a first frame (7) arranged for being connected to the Flat Display, preferably via the FDMI thereof; and
- a second frame (9) arranged for being connected to the support;
- a locking arrangement (11), comprised by one of the first frame or the second frame, and arranged for locking the one of the first frame and the second frame to the other of the first frame and the second frame;
- a hook device (13), comprised by the locking arrangement, arranged for being rotated about a rotation axis (R) into a first position wherein the locking arrangement locks, by the hook device, to the other of the first frame and the second frame and for being rotated into a second position wherein the locking arrangement allows removal of the first frame from the second frame, wherein the hook device is provided with a primary hook element (15) arranged for locking the first frame to the second frame and a secondary hook element (17) arranged for being in contact with the other of the first frame and the second frame for maintaining the hook device in the second position.

2. The system according to claim 1, wherein the locking arrangement further comprises:
- a biasing device (19) arranged for providing a force to the hook device for biasing the hook device into the first position.

3. The system according to claim 2, wherein the force, provided by the biasing device, increases when moving the hook device from the first position towards the second position.

4. The system according to claim 3, wherein a momentum applied to the hook device due to the force, provided by the biasing device, in the second position of the hook device is smaller than a friction between the hook device and the one of the first frame and the second frame for maintaining the hook device in the second position.

5. The system according to any of the claims 2 to 4, wherein the biasing device comprises a spring (21) for providing the force.

6. The system according to any of the preceding claims, wherein a position of the rotation axis relative to the hook device differs between the first position of the hook device and the second position of the hook device.

7. The system according to any of the preceding claims, wherein the hook device or the one of the first frame and the second frame comprises a slot (23), and wherein the rotation axis is at least partly provided in the slot for allowing the hook device to translate relative to the rotation axis.

8. The system according to claim 7, when dependent to any of the claims 2 to 5, wherein an elongated side of the slot is extending in a direction (d_{S}) that encloses an angle (α) in the range of 20 to 60 degrees with a direction (d_{F}) of the force provided by the biasing device, preferably encloses an angle (α) in the range of 25 to 35 degrees with a direction (d_{F}) of the force provided by the biasing device.

9. The system according to any of the preceding claims, wherein, in the first position of the hook device, the primary hook element engages with an engaging element (25) of the other of the first frame and the second frame for locking the locking arrangement to the other of the first frame and the second frame and wherein, in the second position of the hook device, the secondary hook element engages with the engaging element of the other of the first frame and the second frame.

10. The system according to claim 9, wherein the primary hook element is positioned relative to the secondary hook element such that, when the hook device is in the second position, upon disengagement of the secondary hook element with the engaging element, engagement of the primary hook element with the engaging element of the other of the first frame and the second frame for locking the locking arrangement to the other of the first frame and the second frame, by movement of the hook device towards the first position thereof, is avoided.

11. The system according to any of the preceding claims, wherein the system further comprises at least one of:
- a blocking arrangement (27) arranged for blocking a movement of the hook device out of the first position; and
- a hanging device (29) arranged for hanging the first frame on the second frame.

12. The system according to any of the preceding claims, wherein a maximum distance of a first engagement surface of the hook device for engagement of the primary hook element with the other of the first frame and the second frame and a maximum distance of a second engagement surface of the hook device for engagement of the secondary hook element with the other of the first frame and the second frame are substantially equal, preferably equal.

13. A method (101) of removing a Flat Display (3), preferably provided with a Flat Display Mounting Interface (FDMI), from a support (5) such as a stand or wall mount, using a system (1) according to any of the preceding claims, the method comprising the step of:
- rotating (103), by a user, the hook device about the rotation axis into the second position wherein the locking arrangement allows removal of the first frame from the second frame.

14. The method according to claim 13, wherein the method further comprises the steps of:
- moving (105), by the user, the one of the first frame and the second frame relative to the other of the first frame and the second frame for disengaging the hook device from the other of the first frame and the second frame; and
- disconnecting (107), by the user, the first frame from the second frame.

15. A method (201) of removably attaching a Flat Display (3), preferably provided with a Flat Display Mounting Interface (FDMI), to a support (5) such as a stand or wall mount, using a system (1) according to any of the claims 1 to 13, the method comprising the step of:
- moving (203), by a user, the one of the first frame and the second frame relative to the other of the first frame and the second frame for locking the hook device, with the primary hook element to the other of the first frame and the second frame.
